# EUROPÄISCHE PATENTSCHRIFT

(11) **EP 0 608 822 B1**
(45) Veröffentlichungstag und Bekanntmachung des Hinweises auf die Patenterteilung: **10.03.1999**
(21) Anmeldenummer: 94101030.8
(22) Anmeldetag: 25.01.1994
(51) Int. Cl.: G11B 33/04

(54) **CD-Kassette mit Klemmhalterung**
CD-box with damping means
Cassette pour disque compact avec moyen de fixation

(30) Priorität: 27.01.1993 DE 4302236; 19.11.1993 DE 4339335; 08.12.1993 DE 4341763
(43) Veröffentlichungstag der Anmeldung: 03.08.1994
(60) Teilanmeldung: 97121492.9
(73) Patentinhaber: Luckow, Hans-Jürgen, D-24558 Henstedt-Rhen (DE)
(72) Erfinder: Luckow, Hans-Jürgen, D-24558 Henstedt-Rhen (DE)
(74) Vertreter: Klickow, Hans-Henning

(56) Entgegenhaltungen:
- EP-A- 0 114 631
- EP-A- 0 188 663
- EP-A- 0 330 292
- EP-A- 0 384 525
- EP-A- 0 515 342
- FR-A- 2 625 975

## Beschreibung

Die Erfindung betrifft eine Kassette zur Aufbewahrung von Compact-Discs mit einer Unterschale, einer dazu scharnierenden Oberschale und einem Innenteil, der in einer Scharnieranordnung klappbar zwischen der Unterschale und der Oberschale gehalten ist und eine Einrichtungen zur klemmenden Haltung der Compact-Discs aufweist.

Eine solche Kassette ist aus der DE-U-8 810 917 bekannt.

Es sind bereits Kassetten mit Klemmhalterung bekannt, die insgesamt gute und funktionsgerechte Eigenschaften aufweisen. Es zeigt sich jedoch, daß die Handhabung bei einer Entnahme der Compact-Discs sowie bei einem Einfügen der Compact-Discs in die Klemmnuten noch verbessert werden kann.

Solche Kassetten dienen der Aufbewahrung und dem Transport von Compact-Discs (CDs). Sie schützen diese vor Staub und sonstigen Umwelteinflüssen. Es sind auch aus offenkundiger Vorbenutzung Hüllen für die Aufbewahrung lediglich einer CD bekannt, bei denen der die CD haltende Innenteil nicht klappbar, sondern über Rastverbindungen mit der Unterschale fest verbunden ist. Dieser Innenteil, auch "Tray" genannt, wird in entsprechenden Maschinen automatisch mit der CD bestückt und dann in die Unterschale der Kassette eingerastet.

Aus der Obengenannten DE-U-88 10 917 ist eine Kassette zur Aufbewahrung von zwei CDs bekannt, bei der der Innenteil zwischen der Ober- und Unterschale klappbar ist und beidseitig Halteeinrichtungen für eine CD aufweist. Diese Kassette ermöglicht das Aufbewahren von zwei CDs, weist aber die Außenabmessungen einer gebräuchlichen Kassette für eine CD auf. Wenn mehr als zwei CDs in einer Kassette aufbewahrt werden sollen, kommen aufwendige und verhältnismäßig voluminöse Konstruktionen zum Einsatz, beispielsweise entsprechend der DE-A-33 01644. Bei dieser Kassette ist der Innenteil als Mittelschale ausgebildet und trägt auf jeder Seite eine CD, zusätzlich sind an der Ober- und Unterschale noch jeweils Halterungen für eine CD vorgesehen. Beiden Arten von Kassetten ist gemeinsam, daß die CD auf einer Lagerplatte liegt und im Bereich ihres Mittellochs gehaltert wird.

Aufgabe der vorliegenden Erfindung ist es daher, eine Kassette der einleitend genannten Art derart zu verbessern, daß die Handhabung bei einem Einsetzen und einer Entnahme von Compact-Discs verbessert wird.

Diese Aufgabe wird erfindungsgemäß dadurch gelöst, daß der Innenteil die Compact-Discs an deren Rand klemmend hält, für jede Compact-Disc ein Klemmnute aufweist und im Bereich von den Klemmnuten mit einer profilierten Abschlußkante derart versehen ist, daß die die Klemmnuten voneinander trennende Innenstege weiter in eine dem Innenteil abgewandte Richtung ragen, als die die Klemmnuten außenseitig begrenzende Außenstege.

Durch die Kombination der profilierten Klemmnuten und der Innenstege sowie der Außenstege wird sowohl eine versetzte Anordnung der Compact-Discs realisiert, als auch eine ausreichende Abstützung der Compact-Discs bereitgestellt. Insbesondere ist es hierdurch möglich, alle Klemmnuten mit einer etwa gleichen wirksamen Eintauchtiefe für die Compact-Discs zu versehen, so daß gleiche Einschub- und Entnahmekräfte bereitgestellt werden. In Abhängigkeit von der jeweils vorgesehenen Anwendung ist es aber auch möglich, bedarfsabhängig unterschiedliche Eintauchtiefen zu realisieren.

Der Erfindung liegt die Erkenntnis zugrunde, daß eine Compact-Disc bei ihrer Aufbewahrung nicht unbedingt mit einer flachen Seite auf einer Lagerplatte liegen muß, sondern daß es ausreichend ist, sie lediglich im Randbereich klemmend zu haltern. Erfindungsgemäß ergreifen die Klemmeinrichtungen den Randbereich nur in einer Umfangshälfte oder in einem Teil einer Umfangshälfte. Die Klemmeinrichtungen können gegebenenfalls unterbrochen sein und somit nur einzelne Punkte oder Teilbereiche der Umfangshälfte klemmend haltern. Der Innenteil der erfindungsgemäßen Kassette kann mit sehr geringem Materialaufwand gefertigt werden, da eine sich über die Fläche der CD erstreckende Lagerplatte nicht erforderlich ist. Unter Umständen können bei einer erfindungsgemäßen Kassette zur Aufbewahrung von mehreren Compact-Discs übereinander dünne Trennplatten zwischen den CDs vorgesehen sein, die ein Verkratzen der Oberflächen der CDs verhindern. Solche Trennplatten sind aber mit den Lagerplatten des Standes der Technik nicht vergleichbar, da sie lediglich eine Schutz- und keinerlei Haltefunktion ausüben.

Aus der EP 188 663 A2 ist es zwar grundsätzlich schon bekannt, Klemmeinrichtungen zur Halterung einer CD an deren Rand vorzusehen. Doch dienen diese Klemmeinrichtungen nur der zusätzlichen Halterung einer bereits auf einer Lagerplatte aufliegenden CD und sind zudem über den gesamten Umfang der CD verteilt. Dies unterscheidet sich aber von der vorliegenden Erfindung, die eine ausschließliche klemmende Halterung in lediglich einer Umfangshälfte vorschlägt und damit die oben angesprochenen wesentlichen Vorteile, insbesondere Materialersparnis beim Innenteil und geringerer Platzbedarf, erzielt.

Die Klemmeinrichtungen sind zweckmäßigerweise als Nuten ausgebildet, in die der Randbereich einer CD einschiebbar ist. Vorteilhafterweise verjüngen sich diese Nuten zum Nutgrund hin. Diese Verjüngung stellt die klemmende Halterung des Randbereichs sicher und bewirkt zudem, daß beim Einschieben und Herausziehen der CD die Nutflanken nur auf einem sehr schmalen Randbereich reibend einwirken, so daß eine Beschädigung des die Informationen tragenden Bereichs der CD ausgeschlossen ist.

Die Nut beschreibt zweckmäßigerweise in der Ebene der in sie einzuschiebenden Compact-Disc einen Kreisbogen, dessen Radius etwa dem Radius der Compact-Disc entspricht. Die Nut kann auch unterbrochen sein und die CD nur an einzelnen Punkten umgreifen.

Die erfindungsgemäße Kassette wird in der Regel zur Aufnahme mehrerer CDs ausgebildet sein. Da diese platzsparend gelagert werden sollen, werden sie in der Regel in geringem Abstand übereinanderliegend an dem Innenteil gehaltert sein. Es ist zweckmäßig, daß die am Innenteil übereinander angeordneten Klemmeinrichtungen zur gegeneinander versetzten Aufnahme der Compact-Discs ausgebildet sind. Dies erleichtert das Ergreifen und Herausziehen einer zwischen anderen CDs gehalterten CD. Wenn beispielsweise die Kassette zur Aufnahme von drei CDs ausgebildet ist, kann die mittlere Nut eine geringere Tiefe aufweisen, so daß die darin gehalterte mittlere CD gegenüber den außenliegenden CDs an der der Nut gegenüberliegenden Seite etwas hervorsteht und sich somit leicht herausziehen läßt.

Die erfindungsgemäße Kassette kann so ausgebildet sein, daß sie die Außenabmessungen einer handelsüblichen Einzelverpackung für Compact-Discs aufweist und dennoch zur Aufnahme von drei CDs eingerichtet ist. Der Innenteil ist zweckmäßigerweise buchartig zwischen Ober- und Unterschale klappbar, seine Scharnierachse liegt also an der gleichen Seitenkante wie die Scharnierachse von Ober- und Unterschale. Es ist aber auch möglich, die Scharnierachse des Innenteils an der der Scharnierachse von Ober- und Unterschale gegenüberliegenden Seitenkante anzuordnen.

Die erfindungsgemäße Kassette wird zweckmäßigerweise aus einem harten Kunststoff gefertigt. Die Ober- sowie Unterschale bestehen vorteilhafterweise aus einem durchsichtigen Kunststoff, wie zum Beispiel glasklarem Polystyrol.

Wenn in den Ansprüchen und der Beschreibung von einer Compact-Disc beziehungsweise von einer CD die Rede ist, so soll dieser Begriff im Rahmen der Erfindung auch andere flache, scheibenförmige Speichermedien mit umfassen, beispielsweise Disketten, Chipkarten oder ähnliches.

Eine symmetrische Anordnung wird dadurch bereitgestellt, daß die Außenstege etwa gleich dimensioniert sind.

Zur Verbesserung des Benutzungskomforts wird vorgeschlagen, daß alle Klemmnuten etwa die gleiche Tiefe aufweisen.

Eine Abstützung der Compact-Discs wird dadurch günstig beeinflußt, daß Innenstege in eine dem Innenteil abgewandte Richtung unterschiedlich lang dimensioniert sind.

Ein Ergreifen der mittleren Compact-Disc kann auch dadurch unterstützt werden, daß ein Bodenbereich der mittleren Klemmnut weniger weit in das Innenteil hineinragt, als Bodenteile der außenseitigen Klemmnuten.

Zur definierten Positionierung des Innenteiles in einer Benutzungsposition wird vorgeschlagen, daß zur Fixierung des Innenteiles relativ zur Unterschale in einer aufgeklappten Positionierung ein zu einer Rastausnehmung korrespondierender Rastvorsprung vorgesehen ist.

Insbesondere ist bei der Ausbildung der Rasteinrichtung daran gedacht, daß der Rastvorsprung im Bereich des Innenteiles angeordnet ist und in einer geschlossenen Positionierung von einer Rastausnehmung aufnehmbar ist, die im Bereich eines Seitenwandstückes der Unterschale angeordnet ist.

Eine andere Ausgestaltung kann aber auch darin bestehen, daß der Rastvorsprung als Teil des seitenwandstückes ausgebildet ist und in einer geöffneten Positionierung des Innenteiles in eine Rastausnehmung eingreift, die im Bereich des Innenteiles angeordnet ist.

In der Zeichnung sind Ausführungsbeispiele der Erfindung schematisch dargestellt. Es zeigen:
- Fig. 1: eine teilweise Darstellung eines Querschnittes durch das Innenteil,
- Fig. 2: eine teilweise Darstellung einer Halterung des Innenteils relativ zur Unterschale,
- Fig. 3: eine modifizierte Draufsicht zu einer Gestaltung des Klemmteiles nach Fig. 1,
- Fig. 4: eine buchförmig aufklappbare Vorrichtung zur Halterung von Compact-Discs mit Schwenkwinkelbegrenzung für das Tray,
- Fig. 5: eine Prinzipdarstellung einer Mitnahmeeinrichtung zum definierten Aufklappen des Trays bei einem Öffnen des Deckels der Verpackung,
- Fig. 6: eine perspektivische Darstellung entsprechend einem Explosionsschaubild von Ober- und Unterschale sowie einem schwenkbaren Mittelteil zur klemmenden Halterung der Compact-Disc,
- Fig. 7: eine Darstellung entsprechend Fig. 6 mit einer modifizierten Gestaltung des Innenteiles zur klemmenden Halterung der Compact-Disc,
- Fig. 8: eine Oberschale gemäß einer anderen Ausführungsform,
- Fig. 9: eine Unterschale, die korrespondierend zur Oberschale von Fig. 8 konstruiert ist,
- Fig. 10: eine teilweise Darstellung einer Seitenansicht eines Innenteiles, das aus zwei verschwenkbaren miteinander verbundenen Teilen ausgebildet ist,
- Fig. 11: eine vergrößerte teilweise Ansicht entsprechend Blickrichtung XI in Fig. 10,
- Fig. 12: eine prinzipielle Seitendarstellung eines im Bereich von Anlageflächen der Klemmnuten verrippten Innenteiles
**und**
- Fig. 13: eine Draufsicht zur Veranschaulichung einer Durchdringung des Innenteiles und der Unterschale zur Ermöglichung einer Mitnahmefunktion bei einem Aufklappen der Oberschale.

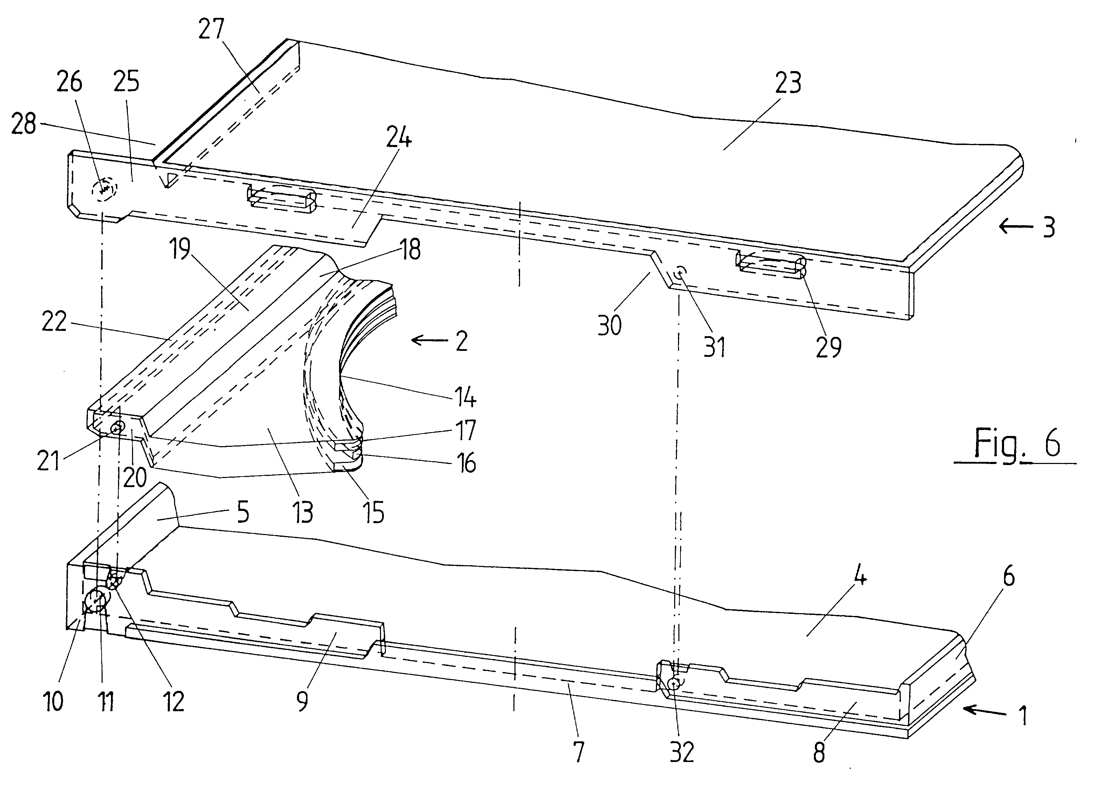

Die erfindungsgemäße CD-Kassette gemäß Fig. 6 umfaßt eine Unterschale (1), einen Innenteil (2) und eine Oberschale (3). Die Unterschale (1) weist eine Bodenplatte (4) auf, an deren Kanten sich der Rückenwandteil (5), der vordere Wandteil (6), die Seitenwandstücke (7), Stege (8,9) sowie die Scharnierwandstücke (10) senkrecht aus der Bodenplattenebene erheben. Die Scharnierwandstücke (10) sind einstückig mit den Stegen (9) verbunden und stehen in Eckverbindung mit dem Rückenwandteil (5) . Die Stege (8,9) sind bezüglich der Seitenwandstücke (7) etwas einwärts versetzt. Die Scharnierwandstücke (10) weisen je eine Bohrung (11) und eine Bohrung (12) auf, die zur Aufnahme der Scharnierzapfen der Oberschale (3) beziehungsweise des Innenteils (2) dienen.

Der Innenteil (2) weist eine Halteplatte (13) mit einer Abschlußkante (14) auf, die in der Ebene der Halteplatte (13) einen Kreisbogen beschreibt, dessen Radius dem Radius einer Compact-Disc angepaßt ist. In die Abschlußkante (14) sind Klemmnuten (15,16,17) eingetieft, in die jeweils eine CD eingeschoben werden kann und darin klemmend gehaltert wird. Die Halteplatte (13) hat in der Regel nicht über ihre gesamte Erstreckung die gleiche Dicke wie auf Höhe ihrer Abschlußkante (14). Normalerweise ist sie entweder von der Ober- oder von der Unterseite ausgehöhlt und weist lediglich im Bereich ihrer Ränder und insbesondere im Bereich der Abschlußkante (14) die volle Dicke auf. Diese Aushöhlungen beziehungsweise Ausnehmungen sind in Fig. 6 nicht dargestellt.

Die Nuten (15,16,17) verjüngen sich zum Nutgrund hin konisch, dies ist in der Zeichnung aber nicht dargestellt. Die in der Mitte der Abschlußkante (14) eingetiefte Nut (16) weist eine geringere Tiefe als die außenliegenden Nuten (15,17) auf, so daß die darin eingesetzte CD an ihrem dem vorderen Wandteil (6) der Unterschale (1) zugewandten Ende gegenüber den beiden außenliegenden, in die Nuten (15) beziehungsweise (17) eingesetzten CDs hervorsteht und sich somit trotz ihrer Anordnung zwischen zwei anderen CDs leicht entnehmen läßt. Aus der rückwärtigen Seite der Halteplatte (13) ist eine einen stumpfen Winkel mit der Halteplatte (13) einschließende Schrägwand (18) angeordnet, die eine parallel zur Halteplatte (13) verlaufende, sich nach außen erstreckende Rückenrandplatte (19) trägt. Die Rückenrandplatte (19) trägt an ihren den Scharnierwandstücken (10) der Unterschale (1) zugewandten Enden zwei Scharnierwandteile (20) mit je einem Scharnierzapfen (21), die in die Bohrungen (12) der Scharnierwandstücke (10) eingreifen. Die Scharnierwandteile (20) des Innenteils (2) werden dabei von den Scharnierwandstücken (10) der Unterschale (1) umschlossen.

Der Abstand der Scharnierzapfen (21) von der rückwärtigen Kante (22) der Rückenrandplatte (19) ist kleiner als der Abstand der Bohrung (12) vom Rückenwandteil (5) und der Bodenplatte (4), so daß ein unbehindertes Umklappen des Innenteils (2) um die durch die Scharnierzapfen (21) und die Bohrungen (12) gebildete Achse möglich ist. Beim vollständigen Umklappen des Innenteils (2) schlägt die Halteplatte (13) an der Oberkante des Rückenwandteils (5) an. Durch die versetzte Anordnung der Rückenrandplatte (19) mit den die Scharnierzapfen (21) aufweisenden Scharnierwandteilen (20) gegenüber der Ebene der Halteplatte (13) schlägt dieselbe erst bei einem Umklappen um 180° oder mehr an den Rückenwandteil (5) an. Der Innenteil (2) ist daher wie eine Buchseite vollständig umklappbar.

Die Oberschale (3) weist eine Deckplatte (23) auf, an der sich an zwei gegenüberliegenden Kanten schmalseitige Wände (24) senkrecht aus der Deckplattenebene erheben. Diese schmalseitigen Wände (24) sind einstückig mit Scharnierwandteilen (25) verbunden, die nach innen ragende Scharnierzapfen (26) aufweisen. Der den Scharnierwandteilen (25) zugewandte Rand der Deckplatte (23) weist eine in die gleiche Richtung wie die schmalseitigen Wände (24) ragende Leiste (27) auf und schließt mit den Scharnierwandteilen (25) eine Aussparung (28) ein. An den schmalseitigen Wänden (24) sind sich einwärts erstreckende Haltenasen (29) angeordnet, die zur Halterung einer in die Oberschale eingeschobenen, hier nicht dargestellt Einlegekarte dienen. Die Leiste (27) dient als Anschlag für diese Einlegekarte. Die schmalseitigen Wände (24) weisen je eine trapezförmige Aussparung (30) auf. Die Scharnier-wandteile (25) der Oberschale (3) umgreifen von außen die Scharnierwandstücke (10) der Unterschale (1). Die Scharnierzapfen (26) ragen dabei in die Bohrungen (11). Im geschlossenen Zustand der Kassette wird die Aussparung zwischen dem Rückenwandteil (5) und der Kante der Deckplatte (23), die die Leiste (27) aufweist, durch die Rückenrandplatte (19) des Innenteils (2) ausgefüllt. Die Seitenwandstücke (7) der Unterschale (1) greifen formschlüssig in die Aussparungen (30) der schmalseitigen Wände (24) ein.

Man erkennt in Fig. 6, daß sich aufgrund der voneinander unabhängigen Scharnieranordnungen zur Verbindung der Unterschale (1) mit dem Innenteil (2) einerseits und der Unterschale (1) mit der Oberschale (3) andererseits der Innenteil zunächst separat mit CDs bestücken läßt und anschließend in die Kassette eingesetzt werden kann.

Die schmalseitigen Wände (24) der Oberschale (3) weisen an ihrer Innenseite je eine Rastnase (31) auf, die mit Ausnehmungen (32) in den Stegen (8) der Unterschale (1) als Rastverschluß zusammenwirken.

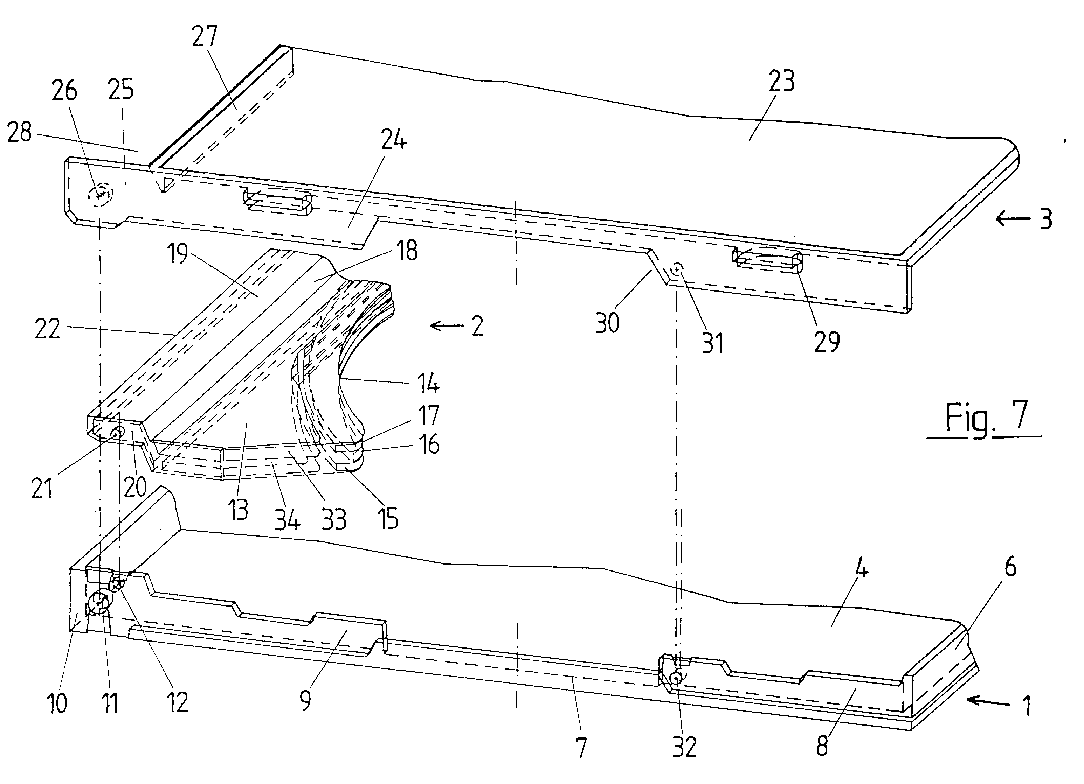

Fig. 7 zeigt eine weitere Ausführungsform der Erfindung, bei der der Innenteil (2) etwas anders gestaltet ist. Es ist hier zu erkennen, daß die Halteplatte (13) verhältnismäßig dünn ausgeführt ist. Sie verdickt sich zur Abschlußkante (14) hin, um dort das Eintiefen der Nuten (15,16,17) zu ermöglichen. An den Seitenkanten der Halteplatte (13) sind mit der Schrägwand (18) verbundene Stege (33) angeordnet, die die Formstabilität des Innenteils (2) erhöhen.

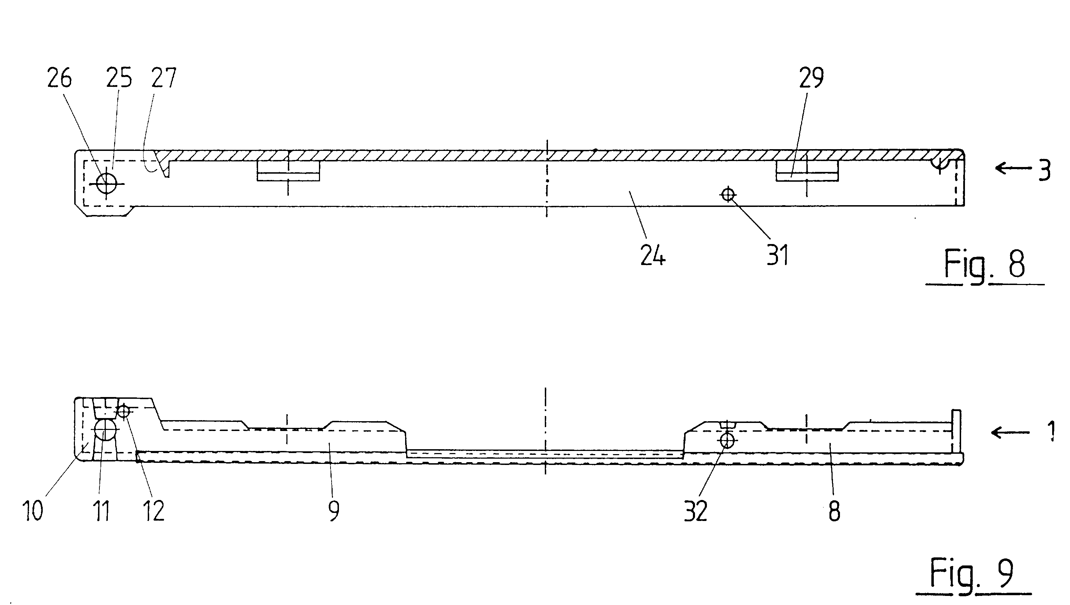

Fig. 8 und Fig. 9 zeigen eine weitere Ausführungsform der erfindungsgemäßen Kassette in einer Ansicht von der Seite. Der Einfachheit halber ist hier der Innenteil (2) nicht dargestellt. Er ist genauso ausgeführt, wie der Innenteil (2) der Fig. 6 oder 7. Die Unterschale (1) weist bei dieser Ausführungsform keine Seitenwandstücke auf. Die schmalseitigen Wände (24) der Oberschale (3) sind hier ohne Aussparung durchgehend ausgebildet. In den Figuren 7 bis 9 bezeichnen die nicht näher beschriebenen Bezugszeichen die gleichen Teile wie in Fig. 6.

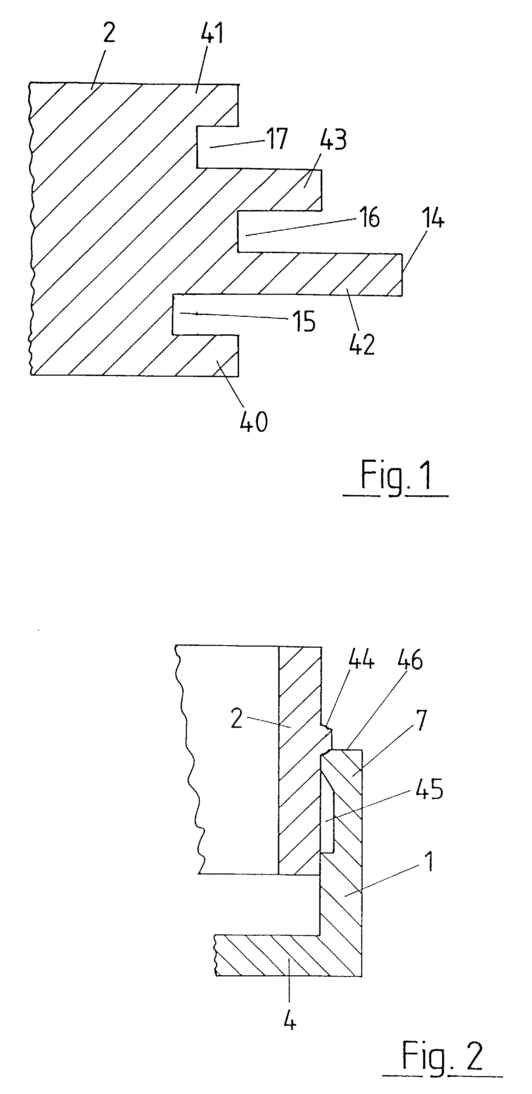

Alternativ zu den vorstehend beschriebenen Ausführungsformen ist vorgesehen, das Innenteil (2) im Bereich der Abschlußkante (14) profiliert auszubilden. Die Profilierung kann dabei gemäß der Ausführungsform in Fig. 1 so realisiert sein, daß die Klemmnuten (15,17) außenseitig von etwa gleichdimensionierten Außenstegen (40,41) begrenzt sind. Die Klemmnuten (15,16,17) werden durch Innenstege (42,43) voneinander getrennt, die in eine dem Innenteil (2) abgewandte Richtung eine unterschiedliche Längenausdehnung aufweisen. Grundsätzlich ist es aber auch denkbar, die Innenstege (42,43) etwa gleich zu dimensionieren. Die Klemmnut (16) ragt mit einem Bodenbereich weniger weit in das Innenteil (2) hinein, als die außenseitigen Klemmnuten (15,17). Insbesondere ist daran gedacht, alle Klemmnuten (15,16,17) mit einer etwa gleichen Eintauchtiefe für die Compact-Discs zu versehen. Grundsätzlich sind jedoch auch unterschiedliche Profilierungstiefen denkbar.

Gemäß der Ausführungsform in Fig. 2 ist eine zusätzliche Fixierung vorgesehen, um bei aufgeklappten Schalen (1,3) eine Positionierung des Innenteiles (2) in einer Entnahmepositionierung vorzusehen. Hierzu ist gemäß der Ausführungsform in Fig. 2 der Innenteil (2) mit einem Rastvorsprung (44) versehen, der in einer aufgeklappten Positionierung auf einer Oberkante (46) der Seitenwandstücke (7) der Unterschale (1) aufliegt. In einer eingeschwenkten Positionierung kann der Rastvorsprung (44) von einer Rastausnehmung (45) aufgenommen sein. Die Rastausnehmung (45) ist im Bereich einer Innenseite des Seitenwandstückes (7) angeordnet. Grundsätzlich ist es ebenfalls denkbar, den Rastvorsprung (44) mit dem Seitenwandstück (7) zu verbinden und im Bereich des Innenteiles (2) eine Rastausnehmung (45) vorzusehen, in die der Rastvorsprung (44) bei dieser Ausführungsform in der geöffneten Positionierung eingreift. Zur Erleichterung der Positionierbewegungen werden der Rastvorsprung (44) und die Rastausnehmung (45) mit entsprechenden Ein- und Auslaufflanken versehen, die schräg angeordnet sind.

Ein weiterer Gedanke der Erfindung besteht darin, eine modulare Anordnung vorzusehen. Diese modulare Anordnung ist derart ausgebildet, daß stets gleiche Unterschalen (1) und Oberschalen (3) verwendet werden, die bedarfsabhängig mit unterschiedlichen Innenteilen (2) ausgestattet werden können. Beispielsweise kann wahlweise entweder der Innenteil (2) gemäß den Ausführungsformen nach P 43 02 236.7 oder der Innenteil gemäß Fig. 1 verwendet werden. Darüber hinaus ist es aber auch denkbar, Innenteile vorzusehen, die grundsätzlich den Ausführungsformen gemäß P 33 01 644, GB 21 54 515, P 34 14 903 oder EP 0 430 956 entsprechen, jedoch an die Unterschale (1) und die Oberschale (3) angepaßte Geometrien aufweisen. Zusätzlich oder alternativ kann auch eine Ausstattung der Unterschale (1) oder Oberschale (3) mit Einsätzen erfolgen, die beispielsweise aus der EP 0 114 631 bekannt sind und ebenfalls zur klemmenden Halterung einer Compact-Disc dienen. Eine Anleitung zur Anpassung der Geometrien ist in der DE-OS 42 10 826.8 veröffentlicht. Hier wird veranschaulicht, wie das erfindungsgemäße modulare Konzept unterschiedlicher Innenteile (2) in standardisierten Gehäuseschalen (1,3) realisierbar ist.

Durch die modulare Ausbildung ist es also möglich, entweder ein Innenteil zur klemmenden Halterung der Compact-Disc im Bereich ihres Randes vorzusehen, ein klappbares buchartiges Teil zur Halterung der Compact-Discs im Bereich ihrer Zentralausnehmung (14) zu realisieren oder eine derartige Halterung der Compact-Discs im Bereich ihrer Zentralausnehmung im Bereich von Einsätzen für die Unterschale und die Oberschale vorzunehmen.

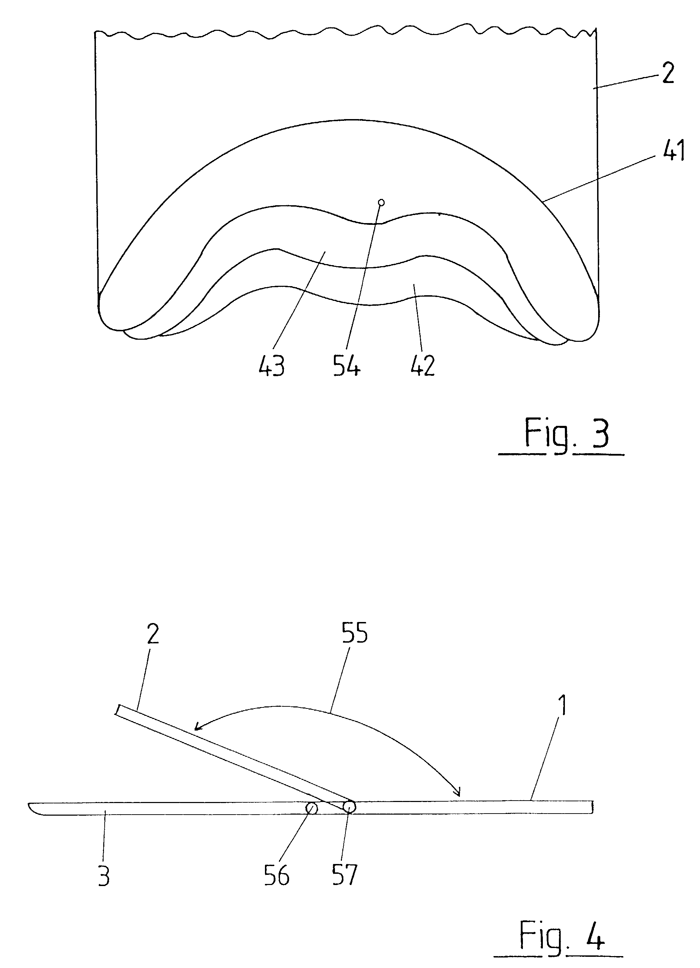

Eine Variante zur Ausführungsform gemäß Fig. 1 ist in Fig. 3 in einer Draufsicht dargestellt. Die Stege (41,42,43) sind dabei in Richtung ihrer der Compact-Disc zuwendbaren Ausdehnung mit einer stark geschwungenen M-förmigen Kontur versehen. Insbesondere ist daran gedacht, einen von den Stegen (41,42,43) aufgespannten Radius größer als einen Außenradius der Compact-Disc vorzusehen. Hierdurch wird gewährleistet, daß die Compact-Disc bei einem Einschieben zunächst von einem Mittelvorsprung (54) erfaßt wird und anschließend ein Einschieben in die seitlichen Bereiche der Klemmnuten (15,16,17) erfolgt. Hierdurch wird zuverlässig ein Verkanten vermieden.

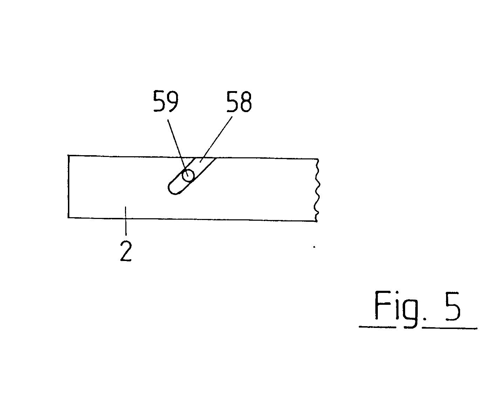

Gemäß der Ausführungsform in Fig. 4 ist vorgesehen, für das Innenteil (2) einen Schwenkwinkel (55) derart definiert zu begrenzen, daß bei einer Öffnung der Oberschale (3) relativ zur Unterschale (1) um ca. 180° ein maximaler Schwenkwinkel des Innenteiles (3) relativ zur Unterschale (1) auf etwa 130° bis 150° begrenzt wird. Dies kann durch entsprechende Rastungen oder Vorsprünge im Randbereich des Innenteiles (2) beziehungsweise der Oberschale (3) erfolgen. Es ist dabei dafür Sorge zu tragen, daß bei einem Erreichen des maximalen Schwenkwinkels eine weitere Schwenkbewegung durch gegeneinandergrenzende Teile beendet wird.

Gemäß der Ausführungsform in Fig. 5 ist daran gedacht, ein automatisches Aufklappen des Innenteiles (2) bei einer Öffnung der Oberschale (3) relativ zur Unterschale (1) vorzunehmen. Es wird hierbei ausgenutzt, daß Drehachsen der Oberschale (3) relativ zur Unterschale (1) sowie des Innenteiles (2) relativ zur Unterschale (1) versetzt zueinander angeordnet sind. Dies ist durch die Eintragung des Außenscharniers (56) und des Innenscharniers (57) gemäß Fig. 4 verdeutlicht. Bei einer Öffnungsbewegung der Oberschale (3) dreht sich somit das Innenteil (2) um eine andere Drehachse als die Oberschale (3). Wird somit beispielsweise im Bereich einer Seitenfläche des Innenteiles (2) eine Führungsnut (58) angeordnet, in die die Oberschale (3) mit einem Führungszapfen (59) eingreift, so wird bei einer Öffnungsbewegung der Oberschale (3) durch den in die Führungsnut (58) eingreifenden Führungszapfen (59) zunächst der Innenteil (2) mitverschwenkt. Durch die unterschiedlichen Bewegungsradien bewegt sich der Führungszapfen (59) in Richtung auf eine Öffnung der Führungsnut (58), aus die der Führungszapfen (59) ab einem Grenzwinkel austritt. Ab diesem Zeitpunkt wird eine weitere Verschwenkung des Innenteiles (2) durch die Oberschale (3) nicht mehr durchgeführt. Insbesondere ist es zweckmäßig, vor Erreichen des Trennens des Führungszapfen (59) von der Führungsnut (58) bereits ein Wirksamwerden des Rastvorsprunges (44) und der Rastausnehmung (45) vorzusehen. Hierdurch wird ein Zurückfallen des Innenteiles (2) vermieden. Alternativ ist es auch möglich, die Führungsnut (58) im Bereich der Oberschale (3) und den Führungszapfen (59) im Bereich des Innenteiles (2) anzuordnen.

Alle in Fig. 1 bis Fig. 5 dargestellten Ausführungsformen sind jeweils alternativ oder ergänzend zu den Ausführungsformen in Fig. 6 bis Fig. 9 realisierbar. Es handelt sich somit bei jeder Ausführungsform um eigenständige und erfinderische Gestaltungen.

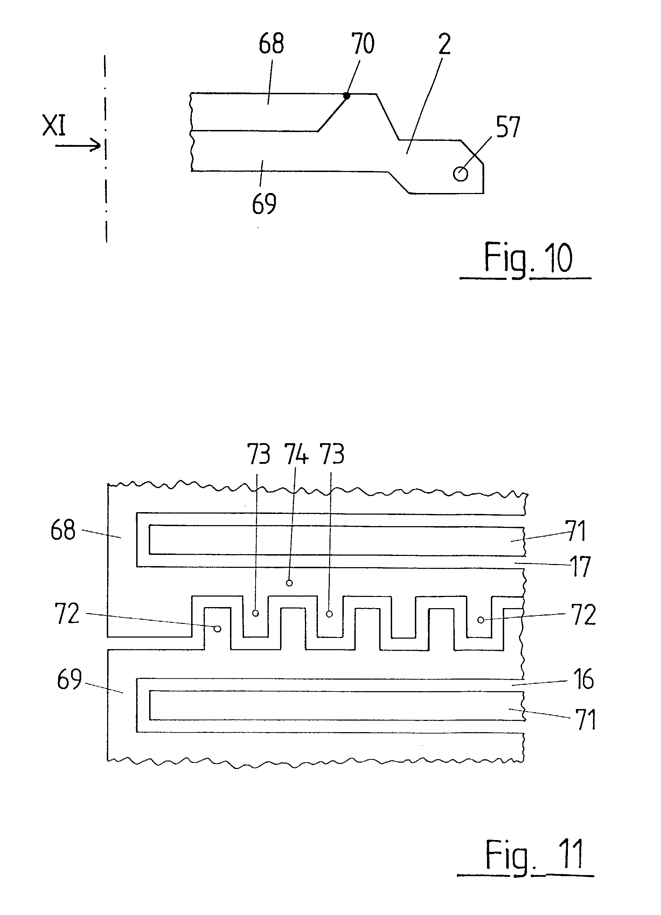

Gemäß der Ausführungsform in Fig. 10 ist vorgesehen, daß der Innenteil (2) gemäß Fig. 1 in zwei Elementplatten (68,69) unterteilt ist. Die Elementplatten (68,69) sind über ein Innenschwenkgelenk (70) miteinander verbunden. Insbesondere ist daran gedacht, daß Innenschwenkgelenk (70) versetzt zum Innenscharnier (57) anzuordnen. Grundsätzlich ist es aber auch denkbar, das Innenschwenkgelenk (70) und das Innenscharnier (57) entlang einer gemeinsamen Mittellinie anzuordnen. Durch die Aufteilung des Innenteiles (2) in gegeneinander verschwenkbare Elementplatten (68,69) wird bei einer Verwendung von Klemmnuten (15,16,17) im Bereich des Innenteiles (2) ein Zugang zu derjenigen Compact-Disc, die im Bereich der Klemmnut (16) angeordnet ist, erleichtert. Ebenfalls ist es denkbar, das Innenteil (2) in drei gegeneinander verschwenkbare Platten zu unterteilen.

Aufgrund der Unterteilung des Innenteiles (2) in die Elementplatten (68,69) wird die Materialstärke im Bereich der Innenstege (42,43) vermindert, falls eine gleiche Baudicke des Innenteiles (2) erreicht werden soll, da jeder der Klemmnuten (15,16,17) jeweils nur noch die halbe Materialdicke zugeordnet werden kann.

Zur Vermeidung einer hieraus resultierenden Verringerung der Festigkeit ist vorgesehen, gemäß der Ausführungsform in Fig. 11 eine ineinandergreifende Verzahnung der Elementplatten (68,69) zu realisieren. Es wird somit keine glatte Begrenzungsfläche zwischen den Elementplatten (68,69) ausgebildet, sondern eine Verzahnung realisiert. Gemäß der Ausführungsform in Fig. 11 ist eine rechteckförmige Konturgebung der Zähne vorgegeben, es können aber beispielsweise auch dreieckförmige Zähne oder geschwungene Konturgebungen realisiert werden.

Gemäß Fig. 11 sind zwei Compact-Discs (71) in die Klemmnuten (16,17) eingesetzt. Die ineinander eingreifenden Verzahnungen (72) können mit gleichartigen Zähnen versehen sein, grundsätzlich sind jedoch auch Variationen der Verzahnung (72) möglich. Zwischen einzelnen Zähnen (73) ist jeweils ein Verbindungssteg (74) angeordnet, der für den erforderlichen Zusammenhalt sorgt.

Aus Fig. 16 ist erkennbar, daß es grundsätzlich ausreichend ist, die Verzahnung (72) in der Umgebung der Klemmnuten (15,16,17) anzuordnen. Im weiteren Bereich des Innenteiles (2) ist die Verzahnung (72) entbehrlich, da hier eine größere Materialstärke vorliegt, die nicht von den Klemmnuten (15,16,17) geschwächt ist.

Aus einer weiteren Betrachtung der Mitnahmeeinrichtung gemäß Fig. 5 ist erkennbar, daß im Bereich der Seitenwand der Unterschale (1) eine Ausnehmung (75) angeordnet ist, in die das Innenteil (2) mit einer Seitenwandprofilierung (76) eingreift. Mit Hilfe der Seitenwandprofilierung (76) ragt das Innenteil (2) bis in den Bereich der Oberschale (3), so daß ein Zusammenwirken der Führungsnut (58) und des Führungszapfens (59) ermöglicht wird.

Bei der Realisierung einer Mitnahmeeinrichtung beziehungsweise einer Rastung zur Vorgabe einer definierten Winkelpositionierung des Innenteiles (2) relativ zur Unterschale (1) und zur Oberschale (3) ist es bei einem Innenteil (2) zur Halterung von zwei oder mehreren Compact-Disc zweckmäßig, in zwei Schwenkstellungen des Innenteils (2) entsprechende Rastungen vorzusehen. Beispielsweise ist es möglich, bei einem Aufklappen der Oberschale (3) relativ zur Unterschale (1) mit einem Winkel von etwa 180° sowohl eine gerastete Winkelstellung des Innenteiles (2) relativ zur Unterschale (1) in einem Winkel von etwa 20°, als auch eine weitere angeschlagene Stellung des Innenteiles (2) in einem Winkel von etwa 20° zur Oberschale (3) vorzusehen. Dies erleichtert nochmals das Herausnehmen der Compact-Discs.

Das Innenschwenkgelenk (70) kann in unterschiedlichen Ausführungsformen realisiert werden. Beispielsweise ist eine Realisierung mit Zapfen möglich, die in entsprechende Ausnehmungen eingreift. Es ist aber ebenfalls denkbar, eine entsprechende Materialverjüngung ein Filmscharnier auszubilden.

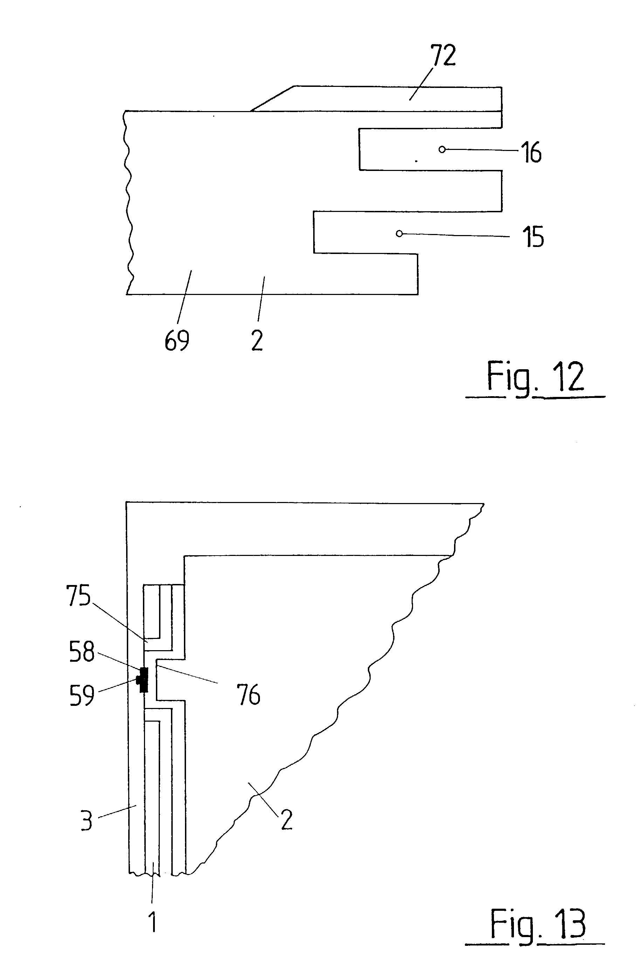

Generell besteht die CD-Kassete gemäß Fig. 1 bis Fig. 13 aus eine Unterschale (1), einem Innenteil (2) und einer Oberschale (3). Die Unterschale (1) weist eine Bodenplatte (4) auf, an deren Kanten sich der Rückenwandteil (5) , der vordere Wandteil (6), die Seitenwandstücke (7), Stege (8,9), sowie die Scharnier-Wandstücke (10) senkrecht aus der Bodenplattenebene erheben. Die Scharnierwandstücke (10) sind einstückig mit den Stegen (9) verbunden und stehen in Eckverbindung mit dem Rückenwandteil (5). Die Stege (8,9) sind bezüglich der Seitenwandstücke (7) etwas einwärts versetzt. Die Scharnier-Wandstücke (10) weisen je eine Bohrung (11) und eine Bohrung (12) auf, die zur Aufnahme der Scharnierzapfen der Oberschale beziehungsweise des Innenteils (2) dienen.

An drei Seitenkanten des Innenteils (2) sind Randstege (117,118,119) angeordnet, an zwei gegenüber liegenden Seitenkanten erstrecken sich Seitenwandstücke (120) auswärts. Diese Seitenwandstücke (120) sind trapezförmig ausgebildet und weisen abgeschrägte Ränder (121) auf, die im geschlossenen Zustand der Kassette mit den abgeschrägten Rändern (122) der Seitenwandstücke (7) der Unterschale (1) fluchten. An der rückwärtigen Seite der Halteplatte (13) ist eine einen stumpfen Winkel mit der Halteplatte (13) einschließende Schrägwand (123) angeordnet, die eine parallel zur Halteplatte (13) verlaufende, sich nach außen erstreckende Rückenrandplatte (124) trägt. Die Rückenrandplatte (124) trägt an ihren den Scharnier-Wandstücken (10) der Unterschale (1) zugewandter Enden zwei Scharnier-Wandteile mit je einem Scharnierzapfen (126), der in die Bohrungen (12) der Scharnier-Wandstücke (10) eingreifen. Die Scharnier-wandstücke (125) des Innenteils (2) werden dabei von den Scharnier-Wandstücken (10) der Unterschale (1) umschlossen.

Der Abstand der Scharnierzapfen (126) von der rückwärtigen Kante (127) der Rückenrandplatte (124) ist kleiner als der Abstand der Bohrung (12) vom Rückenwandteil (5) und der Bodenplatte (4), so daß ein unbehindertes Umklappen des Innenteils (2) um die durch die Scharnierzapfen (126) und die Bohrungen (12) gebildete Achse möglich ist. Beim vollständigen Umklappen des Innenteils (2) schlagen die Stege (119) an der Oberkante des Rückenwandteils (5) an. Durch die versetzte Anordnung der Rückenrandplatte (124) mit den die Scharnierzapfen (126) aufweisenden Scharnier-Wandteilen (125) gegenüber der Ebene der Halteplatte (13) schlagen die Randstege (119) erst bei einem Umklappen um 180° oder mehr an den Rückenwandteil (5) an. Der Innenteil (2) ist daher wie eine Buchseite vollständig umklappbar.

Die Oberschale (3) weist eine Deckplatte (23) auf, an der sich an zwei gegenüberliegenden Kanten schmalseitige Wände (24) senkrecht aus der Deckplattenebene erheben. Diese schmalseitigen Wände (24) sind einstückig mit Scharnier-Wandteilen (25) verbunden, die nach innen ragende Scharnierzapfen (26) aufweisen. Der den Scharnier-Wandteilen (25) zugewandte Rand der Deckplatte (23) weist eine in die gleiche Richtung wie die schmalseitigen Wände (24) ragende Leiste (27) auf und schließt mit den Scharnier-Wandteilen (25) eine Aussparung (28) ein. An den schmalseitigen Wänden (24) sind sich einwärts erstreckende Haltenasen (29) angeordnet. Diese dienen zur Halterung einer in die Oberschale (3) eingeschobenen, hier nicht dargestellten Einlegekarte. Die Leiste (27) dient als Anschlag für diese Einlegekarte. Die schmalseitigen Wände (24) weisen je eine trapezförmige Aussparung (30) auf.

Die Scharnier-Wandteile (25) der Oberschale (3) umgreifen von außen die Scharnier-Wandstücke (10) der Unterschale (1). Die Scharnierzapfen (26) ragen dabei in die Bohrungen (11). Im geschlossenen Zustand der Kassette wird die Aussparung zwischen dem Rückenwandteil (5) und der Kante der Deckplatte (23), die die Leiste (27) aufweist, durch die Rückenrandplatte (124) des Innenteils (2) ausgefüllt. Die Seitenwandstücke (7) der Unterschale (1) und die Seitenwandstücke (120) des Innenteils (2) greifen formschlüssig in die Aussparungen (30) der schmalseitigen Wände (24) ein. Die Leiste (27) stützt sich auf Vorsprüngen (36) des Innenteils (2) ab und erhöht so die Stabilität der geschlossenen Kassette.

Man erkennt, daß aufgrund der voneinander unabhängigen Scharnieranordnungen zur Verbindung der Unterschale (1) mit dem Innenteil (2) einerseits und der Unterschale (1) mit der Oberschale (3) andererseits sich der Innenteil (2) zunächst separat mit CD-s bestücken läßt und anschließend in die Kassette eingesetzt werden kann.

Beim Öffnen der geschlossenen Kassette kann entweder nur die Oberschale (3) aufgeklappt werden, indem man deren schmalseitige Wände (24) ergreift, oder es kann gleichzeitig der Innenteil (2) mit aufgeklappt werden, in dem man dessen Seitenwandstücke (120) ergreift. Beim gleichzeitigen Aufklappen der Oberschale (3) und des Innenteils (2) verschieben sich diese beiden Teile aufgrund ihrer versetzten Scharnierachsen gegeneinander. Aufgrund der abgeschrägten Ränder (121) der Seitenwandstücke (120) verklemmen diese Seitenwandstücke (120) dabei nicht die Aussparungen (30), sondern gleiten aus diesen heraus und behindern somit die Klappbewegung nicht. Die schmalseitigen Wände (24) der Oberschale (3) weisen an ihrer Innenseite je eine Rastnase (31) auf, die mit Ausnehmungen (32) in den Stegen (8) der Unterschale (1) als Rastverschluß zusammenwirken. Die Randstege (118) des Innenteils (2) weisen Rastnasen (39) auf, die mit an den Innenseiten der Stege (8) der Unterschale (1) angeordneten Ausnehmungen (140) als Rastverschluß zusammenwirken. Ein versehentliches Öffnen der Kassette wird somit verhindert. Die Rastnasen (39) und Ausnehmungen (140) dienen gleichzeitig zur bessereren Halterung des Innenteils (2) beim automatischen Einsetzen in die Unterschale (1).

An der Unterseite der Halteplatte (13) des Innenteils (2) sind vier Stützfüße (141) angeordnet, die sich beim Stapeln von mehreren Innenteilen (2) auf der Halteplatte (13) des jeweils darunterliegenden Innenteils (2) abstützen. Sie sind in der Nähe der Randstege (118,119) angeordnet und stoßen schon bei einer geringen seitlichen Verschiebung der gestapelten Innenteile (2) gegeneinander an diese Randstege (118,119) an. Sie bilden somit auch eine Seitenführung für die gestapelten Innenteile (2).

Eine andere Ausführungsform der erfindungsgemäßen Kassette wird nachfolgend beschrieben. Die Unterschale (i) sowie der Innenteil (2) weisen hier keine Seitenwandstücke auf. Die schmalseitigen Wände (24) der Oberschale (3) sind hier ohne Aussparung durchgehend ausgebildet. Beim Öffnen dieser Kassette kann also zunächst nur die Oberschale (3) aufgeklappt werden, nicht aber gleichzeitig der Innenteil (2). Dieser muß nach dem Aufklappen der Oberschale (3) separat ergriffen und aufgeklappt werden. Bei dieser Ausführungsform weisen nur die Oberschale (3) und die Unterschale (1) zusammenwirkende Rastnasen (31) und Ausnehmungen (32) auf. Der Innenteil (2) und die Unterschale (1) besitzen keine zusammenwirkenden Rastverschlüsse, um das Aufklappen des jetzt ja nicht mehr an Seitenwandstücken greifbaren Innenteils (2) nicht zu erschweren.

Beide Typen von Innenteilen (2) lassen sich auf den herkömmmlichen Maschinen mit CD's bestücken und in die Unterteile (1) einsetzen.

## Patentansprüche

1. Kassette zur Aufbewahrung von Compact-Discs mit einer Unterschale, einer dazu scharnierenden Oberschale und einem Innenteil, der in einer Scharnieranordnung klappbar zwischen der Unterschale und der Oberschale gehalten ist und eine Einrichtungen zur klemmenden Haltung der Compact-Discs aufweist, dadurch gekennzeichnet, daß der Innenteil (2) die Compact-Discs an deren Rand klemmend hält, für jede Compact-Disc eine Klemmnute (15,16,17) aufweist und im Bereich von den Klemmnuten (15,16,17) mit einer profilierten Abschlußkante (14) derart versehen ist, daß die die Klemmnuten (15,16,17) voneinander trennende Innenstege (42,43) weiter in eine dem Innenteil (2) abgewandte Richtung ragen, als die die Klemmnuten (15,17) außenseitig begrenzenden Außenstege (40,41).

2. Kassette nach Anspruch 1, dadurch gekennzeichnet, daß die Außenstege (40,41) etwa gleich dimensioniert sind.

3. Kassette nach einem der Ansprüche 1 oder 2, dadurch gekennzeichnet, daß alle Klemmnuten (15,16,17) etwa die gleiche Tiefe aufweisen.

4. Kassette nach einem der Ansprüche 1 bis 3, dadurch gekennzeichnet, daß Innenstege (42,43) in eine dem Innenteil (2) abgewandte Richtung unterschiedlich lang dimensioniert sind.

5. Kassette nach einem der Ansprüche 1 bis 4, dadurch gekennzeichnet, daß ein Bodenbereich der mittleren Klemmnut (16) weniger weit in das Innenteil (2) hineinragt, als Bodenteile der außenseitigen Klemmnuten (15,17).

6. Kassette nach einem der Ansprüche 1 bis 5, dadurch gekennzeichnet, daß zur Fixierung des Innenteiles (2) relativ zur Unterschale (1) in einer aufgeklappten Positionierung ein zu einer Rastausnehmung (45) korrespondierender Rastvorsprung (44) vorgesehen ist.

7. Kassette nach Anspruch 6, dadurch gekennzeichnet, daß der Rastvorsprung (44) im Bereich des Innenteiles (2) angeordnet ist und in einer geschlossenen Positionierung von einer Rastausnehmung (45) aufnehmbar ist, die im Bereich eines Seitenwandstückes (7) der Unterschale (1) angeordnet ist.

8. Kassette nach einem der Ansprüche 1 bis 6, dadurch gekennzeichnet, daß der Rastvorsprung (44) als Teil des Seitenwandstückes (7) ausgebildet ist und in einer geöffneten Positionierung des Innenteiles (2) in eine Rastausnehmung (45) eingreift, die im Bereich des Innenteiles (2) angeordnet ist.

9. Kassette nach Anspruch 1, dadurch gekennzeichnet, daß die Klemmeinrichtungen als Nuten (15,16,17) ausgebildet sind, in die der Randbereich einer CD einschiebbar ist.

10. Kassette nach Anspruch 9, dadurch gekennzeichnet, daß sich die Nuten (15,16,17) zum Nutgrund hin verjüngen.

11. Kassette nach Anspruch 9 oder 10, dadurch gekennzeichnet, daß die Nut (15,16,17) in der Ebene der in die Nut (15,16,17) einzuschiebenden Compact-Disc einen Kreisbogen beschreibt, dessen Radius etwa dem Radius der Compact-Disc entspricht.

12. Kassette nach einem der Ansprüche 1 bis 11, dadurch gekennzeichnet, daß der Innenteil (2) eine Mehrzahl von übereinander angeordneten Klemmeinrichtungen (15,16,17) aufweist, die zur gegeneinander versetzten Aufnahme einer Mehrzahl von Compact-Disc ausgebildet sind.

13. Kassette nach einem der Ansprüche 1 bis 12, dadurch gekennzeichnet, daß der Innenteil (2) aus mindestens zwei Elementplatten (68,69) ausgebildet ist, die über ein Innenschwenkgelenk (70) miteinander verbunden sind und die jeweils mit mindestens einer Klemmnut (15,16,17) versehen sind.

14. Kassette nach Anspruch 13, dadurch gekennzeichnet, daß das Innenschwenkgelenk (70) einen Versatz zum Innenscharnier (57) aufweist, mit dem der Innenteil (2) verschwenkbar mit den Schalen (1,3) verbunden ist.

15. Kassette nach Anspruch 13 oder 14, dadurch gekennzeichnet, daß die Elementplatten (68,69) im Bereich ihrer einander zugewandten Begrenzungsflächen mindestens bereichsweise mit ineinander eingreifenden Verzahnungen (72) versehen sind.

16. Kassette nach einem der Ansprüche 1 bis 12, dadurch gekennzeichnet, daß der Innenteil (2) über einen in eine Führungsnut (58) eingreifende Führungszapfen (59) während einer Öffnungs- und Schließbewegung mit der Oberschale (3) verbunden ist und daß der Innenteil (2) im Bereich einer Seitenwandprofilierung (76) eine Ausnehmung (75) im Bereich der Unterschale (1) in Richtung auf die Oberschale (3) durchdringt.

## Claims

1. Case for storing compact discs having a lower shell, an upper shell hinged thereon and an inner part, which is held so as to be foldable in a hinge arrangement between the lower shell and the upper shell and comprises a device for holding the compact discs in a clamped manner, characterized in that the inner part (2) holds the compact discs in a clamped manner at their edge, has one clamping groove (15, 16, 17) for each compact disc and is provided in the region of the clamping grooves (15, 16, 17) with a profiled front edge (14) in such a way that the inner webs (42, 43) separating the clamping grooves (15, 16, 17) from one another project further in a direction remote from the inner part (2) than the outer webs (40, 41) delimiting the clamping grooves (15, 17) at the outside.

2. Case according to claim 1, characterized in that the outer webs (40, 41) are of substantially identical dimensions.

3. Case according to one of claims 1 or 2, characterized in that all of the clamping grooves (15, 16, 17) have substantially the same depth.

4. Case according to one of claims 1 to 3, characterized in that inner webs (42, 43) are of differing length in a direction remote from the inner part (2).

5. Case according to one of claims 1 to 4, characterized in that a base region of the middle clamping groove (16) projects to a lesser extent into the inner part (2) than base parts of the outside clamping grooves (15, 17).

6. Case according to one of claims 1 to 5, characterized in that for fixing the inner part (2) relative to the lower shell (1) in a folded-open position a detent projection (44) corresponding to a detent recess (45) is provided.

7. Case according to claim 6, characterized in that the detent projection (44) is disposed in the region of the inner part (2) and in a closed position is receivable by a detent recess (45), which is disposed in the region of a side wall piece (7) of the lower shell (1).

8. Case according to one of claims 1 to 6, characterized in that the detent projection (44) forms part of the side wall piece (7) and in an open position of the inner part (2) engages into a detent recess (45), which is disposed in the region of the inner part (2).

9. Case according to claim 1, characterized in that the clamping devices take the form of grooves (15, 16, 17), into which the edge region of a CD is insertable.

10. Case according to claim 9, characterized in that the grooves (15, 16, 17) taper towards the groove base.

11. Case according to claim 9 or 10, characterized in that the groove (15, 16, 17) in the plane of the compact disc to be inserted into the groove (15, 16, 17) describes an arc, the radius of which substantially corresponds to the radius of the compact disc.

12. Case according to one of claims 1 to 11, characterized in that the inner part (2) has a plurality of clamping devices (15, 16, 17), which are disposed one above the other and designed for receiving a plurality of compact discs in a mutually offset manner.

13. Case according to one of claims 1 to 12, characterized in that the inner part (2) is formed by at least two element plates (68, 69), which are connected to one another by an internal swivel joint (70) and provided in each case with at least one clamping groove (15, 16, 17).

14. Case according to claim 13, characterized in that the internal swivel joint (70) is offset relative to the internal hinge (57), which connects the inner part (2) pivotally to the shells (1, 3).

15. Case according to claim 13 or 14, characterized in that the element plates (68, 69) in the region of their opposing boundary surfaces are provided at least in regions with teeth (72), which engage one into the other.

16. Case according to one of claims 1 to 12, characterized in that the inner part (2) during an opening and closing motion is connected to the upper shell (3) by a guide pin (59), which engages into a guide groove (58), and that the inner part (2) in the region of a side wall moulding (76) penetrates a recess (75) in the region of the lower shell (1) in the direction of the upper shell (3).

## Revendications

1. Cassette destinée à contenir des disques compacts , qui comporte un élément inférieur en cuvette , un élément supérieur en cuvette articulé par charnière au premier élément et une partie interne qui est maintenue entre l'élément inférieur en cuvette et l'élément supérieur en cuvette de façon à pouvoir être rabattue par un dispositif à charnière et qui présente des moyens destinés à retenir par serrage les disques compacts, la cassette étant caractérisée en ce que la partie interne (2) qui maintient les disques compacts à leur bord par effet de serrage, présente pour chacun des disques compacts une rainure de serrage (15, 16, 17) et comporte, dans la zone des rainures de serrage (15, 16, 17) un côté d'extrémité profilé (14) de telle façon que les nervures internes (42, 43) qui séparent l'une de l'autre les rainures de serrage (15, 16, 17) s'avancent plus loin dans un sens opposé à la partie interne (2) que les nervures externes (40, 41) qui limitent au côté externe les rainures de serrage (15, 17).

2. Cassette suivant la revendication 1. caractérisée en ce que les nervures externes (40, 41) ont été prévues de dimensions identiques.

3. Cassette suivant l'une ou l'autre des revendications 1 et 2, caractérisée en ce que les rainures de serrage (15, 16, 17) présentent la même profondeur.

4. Cassette suivant l'une quelconque des revendications 1 à 3, caractérisée en ce que les nervures internes (42, 43), dans un sens opposé à la partie interne (2), ont été prévues de dimensions telles qu'elles soient de longueurs différentes.

5. Cassette suivant l'une quelconque des revendications 1 à 4 caractérisée en ce qu'une zone de fond de la rainure de serrage médiane (16) s'engage moins loin dans la partie interne (2) que les parties de fond des rainures de serrage externes (15, 17).

6. Cassette suivant l'une quelconque des revendications 1 à 5, caractérisée en ce que pour la fixation de la partie interne (2) par rapport à l'élément inférieur en cuvette (1) dans une portion d'ouverture par pivotement, il a été prévu une saillie d'arrêt (44) qui correspond à un cran d'arrêt (45).

7. Cassette suivant la revendication 6, caractérisée en ce que la saillie d'arrêt (44) a été formée sur la partie interne (2) et, pour une position de fermeture, peut être placée en engagement dans un organe d'arrêt (45) qui a été prévu dans la zone d'une pièce de paroi latérale (7) de l'élément inférieur en cuvette (1).

8. Cassette suivant l'une quelconque des revendications 1 à 6, caractérisée en ce que la saillie d'arrêt (44) a été prévue de façon à se présenter comme une partie de la pièce de paroi latérale (7) et, pour une position d'ouverture de la partie interne (2) se place en engagement dans un cran d'arrêt (45) qui a été prévu dans la zone de cette partie interne (2).

9. Cassette suivant la revendication 1, caractérisée en ce que les moyens de serrage ont été prévus sous la forme de rainures (15, 16, 17) dans lesquels peut être introduite la zone de bord d'un disque compact.

10. Cassette suivant la revendication 9, caractérisée en ce que les rainures (15, 16, 17) vont en se réduisant en direction de leur fond.

11. Cassette suivant l'une ou l'autre des revendications 9 et 10, caractérisée en ce que la rainure (15, 16, 17), dans le plan du disque compact à y introduire, décrit un arc de cercle dont le rayon correspond au rayon du disque compact.

12. , Cassette suivant l'une quelconque des revendications 1 à 11 caractérisée en ce que la partie interne (2) présente une série de moyens de serrage disposés l'un au dessus de l'autre (15, 16, 17) qui ont été prévus pour recevoir et contenir, en décalage l'un par rapport à l'autre une série de disques compacts.

13. Cassette suivant l'une des revendications 1 à 12, caractérisée en ce que la partie interne 2 a été formée d'au moins deux plaques (68, 69) qui sont reliées l'une à l'autre par une articulation interne (70) permettant le pivotement et qui présente chacune au moins une rainure de serrage (15, 16, 17).

14. Cassette suivant la revendication 13, caractérisée en ce que l'articulation interne (70) qui permet le pivotement présente un décalage par rapport à la charnière interne (57) au moyen de laquelle la partie interne 2 est reliée aux éléments en cuvette (1, 3) de façon à pouvoir pivoter.

15. Cassette suivant l'une ou l'autre des revendications 13 et 14, caractérisée en ce que les plaques 68, 69 sont munies dans la zone de leurs faces de délimitation tournée l'une vers l'autre, de dentures (72), au moins locales, qui engrènent entre elles.

16. Cassette suivant l'une quelconque des revendications 1 à 12, caractérisée en ce que la partie interne 2 est reliée à l'élément supérieur en cuvette 3, pendant un mouvement d'ouverture et un mouvement de fermeture, par un bouton de guidage (59) qui se trouve en engagement dans une rainure de guidage (58) et en ce que la partie interne (2), dans la zone d'une partie profilée de paroi latérale (76), passe par une ouverture (75) dans la zone de l'élément inférieur en cuvette (1) en direction de l'élément supérieur en cuvette (3).
